Europäisches Patentamt

European Patent Office

Office européen des brevets

(11) Numéro de publication : **0 105 800**
**B1**

(12) # FASCICULE DE BREVET EUROPÉEN

(45) Date de publication du fascicule du brevet :
21.01.87

(21) Numéro de dépôt : **83401904.4**

(22) Date de dépôt : **28.09.83**

(51) Int. Cl.⁴ : **G 21 C 9/00**, G 21 C 11/08,
E 04 B 5/43

(54) Structure de protection du plancher d'une enceinte de béton.

(30) Priorité : **30.09.82 FR 8216475**

(43) Date de publication de la demande :
**18.04.84 Bulletin 84/16**

(45) Mention de la délivrance du brevet :
**21.01.87 Bulletin 87/04**

(84) Etats contractants désignés :
**BE DE GB IT NL**

(56) Documents cités :
**FR-A- 1 492 900
FR-A- 2 226 727
FR-A- 2 300 401
FR-A- 2 321 175
FR-A- 2 397 590
US-A- 3 288 998**

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Casselman, Chantal
Résidence Latil Place Pierre de Coubertin
F-04100 Manosque (FR)**
Inventeur : **Malet, Jean-Claude
9, Allée des Acacias Les Logisssons
F-13770 Venelles (FR)**
Inventeur : **Sophy, Yvon
Le Petit Nice-Villa No. 11 Chemin du Four
F-13100 Aix en Provence (FR)**
Inventeur : **Pacton, Roger
Rue de la Verdure Résidence Le Riou No. 2
F-13090 Aix en Provence (FR)**

(74) Mandataire : **Mongrédien, André et al
c/o BREVATOME 25, rue de Ponthieu
F-75008 Paris (FR)**

## Description

La présente invention se rapporte à une structure de protection du plancher d'une enceinte de béton destinée à recevoir un fluide susceptible d'être porté à haute température tel que du sodium liquide ou un hydrocarbure.

Une enceinte de ce type peut servir notamment à réaliser des essais de feux d'un volume important (plusieurs dizaines de tonnes) de sodium, de pétrole ou de tout fluide comparable. De façon plus courante, une telle enceinte peut simplement constituer une enceinte de rétention de sodium liquide, par exemple sur le site d'une centrale nucléaire à neutrons rapides.

Dans une telle enceinte, il est souhaitable de pouvoir disposer d'une protection thermique du béton de l'enceinte.

De plus, la structure de protection doit être étanche, de façon à éviter que le fluide contenu dans l'enceinte ne pénètre dans le béton. En particulier, lorsque l'enceinte contient du sodium à une température supérieure à 200 °C, l'interaction directe entre le sodium et le béton conduirait, dans un premier temps, à une réaction du sodium avec l'eau contenue dans le béton entraînant la production d'hydrogène et de soude et, dans un deuxième temps, à une infiltration du sodium dans le béton à une vitesse de 50 à 70 mm par heure, l'hydrogène pouvant alors réagir avec l'oxygène de l'air et provoquer une détonation dont l'onde de choc entraînerait du sodium pulvérisé.

Il est également souhaitable de pouvoir disposer d'une structure de protection dont le plancher soit aussi plan que possible, et cette planéité doit être maintenue quelle que soit la température du fluide, c'est-à-dire indépendamment de la dilatation différentielle de la structure et de l'enceinte de béton. Ces caractéristiques permettent à la fois d'éviter la formation de fissures dans la structure de protection et d'éviter qu'apparaissent des points chauds résultant d'un contact ponctuel très localisé. Dans certaines applications, il peut aussi être nécessaire de disposer d'une structure dont le plancher soit parfaitement plan, afin de permettre la réalisation de manutentions sur coussin d'air avant le remplissage de l'enceinte.

Enfin, on souhaite pouvoir disposer d'une structure de protection qui soit d'un coût relativement bas et qui puisse être facilement réparée. A cet effet, la fabrication de la structure de protection devra de préférence pouvoir être réalisée sur place à l'intérieur même de l'enceinte devant contenir le fluide.

Une structure constituée d'une ossature de supportage en profilés entrecroisés selon un maillage régulier, d'un garnissage remplissant les alvéoles définis entre les profilés et d'une peau métallique reposant sur l'ossature de supportage et constituée par des plaques fixées par soudure sur les profilés est connue en soi de l'art antérieur. Le FR-A-2 300 401 a trait à une structure d'isolation thermique de ce type.

La présente invention a précisément pour objet une structure de protection d'une enceinte de béton répondant à toutes les exigences qui viennent d'être mentionnées.

A cet effet, il est proposé conformément à l'invention, une structure de protection du plancher d'une enceinte de béton devant contenir un fluide à haute température, comprenant une ossature de supportage en profilés entrecroisés selon un maillage régulier, un garnissage remplissant les alvéoles définis entre les profilés, et une peau métallique étanche reposant sur l'ossature de supportage, caractérisée en ce que l'ossature de supportage en profilés repose sur une couche poreuse recouvrant le plancher de béton de l'enceinte et en ce que la peau métallique est constituée par des plaques fixées sur les profilés et assemblées par des soudures disposées selon les axes des profilés, ladite peau métallique présentant une remontée périphérique le long des parois de l'enceinte, cette remontée périphérique définissant un bord libre situé au-dessus du niveau maximum de fluide dans l'enceinte.

Dans une telle structure, la peau métallique peut être parfaitement étanche et plane et sa fabrication ainsi que sa réparation éventuelle peuvent être réalisées sans difficulté, à l'intérieur même de l'enceinte. De plus, la configuration de l'ossature de supportage et de la couche poreuse au moyen desquelles la peau métallique repose sur le plancher de l'enceinte est telle que cette peau est libre de se dilater ou de se contracter par rapport au béton de l'enceinte sans perdre sa planéité. La présence de l'ossature de supportage et de la couche poreuse permet en outre d'assurer la protection thermique du béton de l'enceinte vis-à-vis du fluide qu'elle contient.

De préférence, le garnissage entre les profilés comprend des dalles en béton remplissant les alvéoles et des joints souples formés entre les dalles et les profilés et servant à la fois de joints de dilatation, et de structure de drainage de l'eau désorbée par les faces chaudes des dalles.

Conformément à une autre caractéristique de l'invention, les moyens par lesquels les plaques sont fixées sur les profilés sont aptes à se rompre sous l'effet d'une dilatation différentielle entre les plaques et les profilés sans destruction de l'étanchéité.

Conformément à une caractéristique secondaire de l'invention, la structure comprend de plus une virole dont un bord est fixé sur les parois de l'enceinte, ladite virole coiffant le bord libre de la remontée périphérique de la peau métallique. Afin d'améliorer encore la planéité de la peau métallique, des platines pour calage de niveau peuvent être disposées sous les profilés.

Pour permettre l'évacuation de l'eau désorbée par les faces chaudes des dalles en béton remplissant les alvéoles définis entre les profilés de l'ossature de supportage, le plancher de béton de l'enceinte peut comporter des drains.

On décrira maintenant, à titre d'exemple non limitatif, un mode de réalisation particulier de l'invention en se référant aux dessins annexés dans lesquels :

la figure 1 est une vue en coupe transversale de la partie inférieure d'une enceinte de béton comportant une structure de protection réalisée conformément aux enseignements de la présente invention, et

la figure 2 est une vue de dessus partielle éclatée montrant la disposition des plaques dont l'assemblage par soudure forme la peau métallique de la structure de protection, ainsi que l'ossature de supportage constituée de profilés entrecroisés formant un maillage carré.

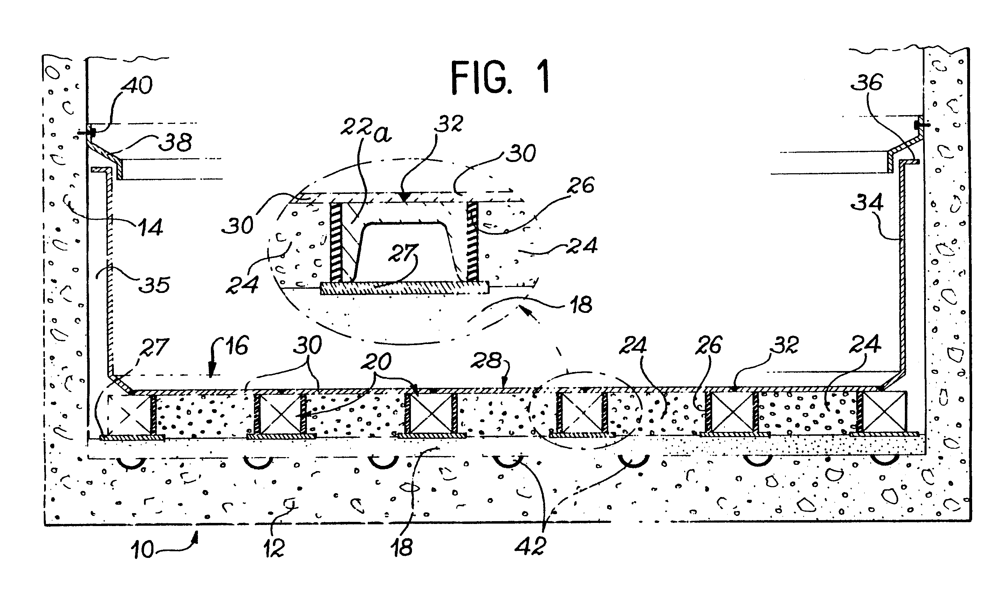

Sur la figure 1, on a représenté la partie inférieure d'une enceinte ou caisson 10 en béton comportant un plancher horizontal 12 et des parois verticales 14.

Conformément à l'invention, le plancher 12 et la partie inférieure des parois 14 sont recouverts d'une structure de protection 16 à l'intérieur de laquelle doit être reçu un fluide susceptible d'être porté à haute température tel que du sodium liquide ou un hydrocarbure.

En partant du plancher de béton 12 de l'enceinte, la structure de protection 16 comprend tout d'abord une couche poreuse horizontale 18 servant de support et autorisant les mouvements de dilatation du reste de la structure 16. Cette couche poreuse 18 peut notamment être constituée par un lit de sable sec recouvrant le plancher de béton 12.

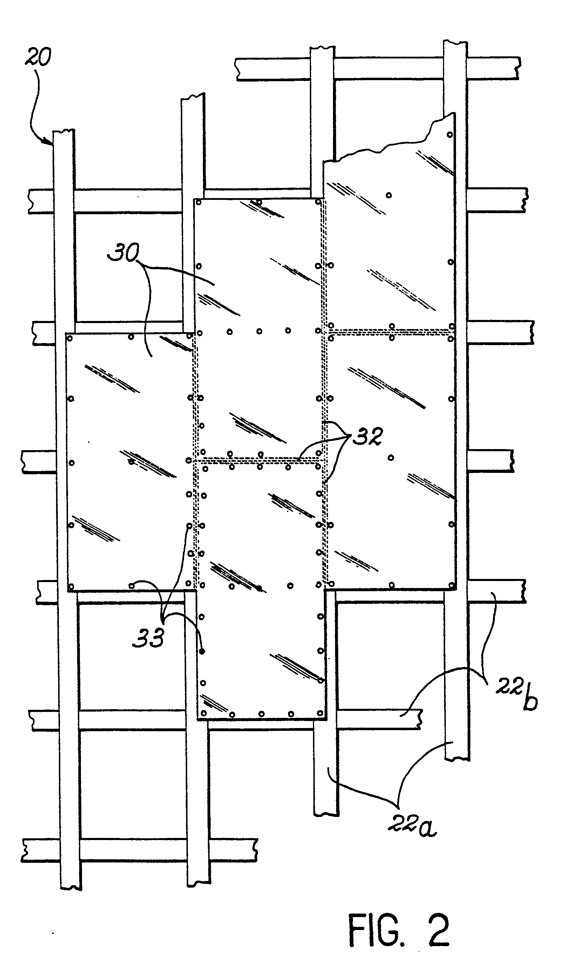

La structure de protection 16 comprend, de plus, au-dessus de la couche poreuse 18, une ossature de supportage 20 constituée, comme l'illustre notamment la figure 2, par des profilés 22a et 22b entrecroisés selon un maillage régulier et reposant sur la couche poreuse 18.

Dans le mode de réalisation représenté, les profilés sont disposés selon deux directions perpendiculaires 22a et 22b pour former un réseau à mailles carrées. Les profilés peuvent présenter soit une section en forme de U renversé (comme on l'a représenté à plus grande échelle sur la figure 1) soit une section en forme de I, et ils sont soudés entre eux de façon à conférer une certaine rigidité à la structure de supportage 22.

Les alvéoles formés entre les profilés entrecroisés 22a et 22b de l'ossature de supportage sont remplis par un garnissage alvéolaire comprenant principalement des dalles en béton 24 dont l'épaisseur est pratiquement identique à celles des profilés 22 et qui remplissent la quasi-totalité des alvéoles définis entre ces derniers. Ce garnissage comprend de plus des joints souples 26 constitués par des plaques d'un matériau souple et éventuellement destructible par la chaleur, tel que du polyuréthane ou du polystyrène expansé, disposées entre les dalles 24 et les profilés 22. Les joints 26 ont pour fonctions de servir de joints de dilatation entre les profilés et les dalles en béton et de permettre l'écoulement de l'eau désorbée par la face chaude des dalles en béton 24 vers la couche poreuse 18.

Afin que les profilés entrecroisés 22a et 22b soient sensiblement au même niveau, on prévoit de préférence, comme on l'a représenté sur la figure 1, de disposer les profilés sur des plaques ou tôles métalliques constituant des platines 27 pour calage de niveau.

Enfin, la structure de protection selon l'invention comprend une peau métallique étanche 28 reposant sur l'ossature de supportage 20 et sur les dalles en béton 24.

Comme l'illustre plus particulièrement la figure 2, la peau métallique 28 est constituée par des plaques métalliques planes 30, par exemple de forme rectangulaire qui sont disposées en quinconce et assemblées par des soudures 32 disposées selon les axes des profilés. De façon plus précise, la largeur des plaques 30 peut être égale à la distance séparant les axes de deux profilés parallèles successifs 22a de l'ossature de supportage 20, la longueur des plaques 30 étant double de leur largeur.

Bien entendu, cette disposition n'est donnée qu'à titre d'exemple, et des plaques carrées ou présentant d'autres proportions pourraient être utilisées. Dans tous les cas, la disposition des plaques 30 sur l'ossature 20 de supportage est telle que chaque bord de plaque 30 se trouve sur l'axe d'un profilé support 22.

Afin de permettre leur assemblage étanche au moyen des soudures 32, les plaques 30 sont positionnées bord à bord de façon jointive et présentent sur leurs bords des chanfreins qui sont tournés vers le haut en considérant la figure 1.

Afin d'assurer la planéité de la peau métallique étanche 28 en dépit des déformations provoquées généralement par l'échauffement local des plaques minces lors de leur soudure, ces plaques 30 sont fixées sur les profilés 22 avant la réalisation des soudures 32. Cette fixation peut notamment être obtenue au moyen de points de soudure 33 répartis de façon régulière à la périphérie et sur la surface des plaques 30 en regard des profilés 22.

Les moyens de fixation sur les profilés 22 présentent une résistance limitée, de façon à pouvoir se rompre sous l'effet d'une dilatation différentielle entre la peau étanche 28 et l'ossature de supportage 20. Il est ainsi possible de maintenir une bonne planéité de la peau métallique 28, même lorsque des variations de température importantes du fluide contenu dans l'enceinte conduisent à de fortes dilatation de la structure.

En plus de la partie recouvrant le plancher de béton 12 de l'enceinte, la structure de protection 16 selon l'invention comprend une remontée périphérique 34 de la peau métallique 28 le long des parois verticales 14 de l'enceinte. Cette remontée périphérique 34 est disposée à une certaine distance des parois 14, de façon à permettre la dilatation de la structure de protection 16.

Le bord libre 36 de la remontée périphérique 34 est situé au-dessus du niveau maximum du fluide dans l'enceinte 10. Le centrage de la peau métallique 28 est réalisé au moyen d'une tôle 38 fixée sur les parois 14 de l'enceinte par tous moyens appropriés tels que des goujons 40, cette tôle coiffant le bord libre 36 de la remontée périphérique de la peau métallique.

Comme on l'a mentionné précédemment, la chaleur dégagée par le fluide à haute température contenu dans l'enceinte de béton 10 conduit à une désorption d'eau par la face chaude des dalles en béton 24. Si aucun moyen n'était prévu pour évacuer cette eau, celle-ci pourrait entraîner une surpression et faire éclater la peau métallique 28. Afin de supprimer ce risque, les joints isolants 26 ont notamment pour fonction de permettre l'évacuation de l'eau désorbée par les faces chaudes des dalles 24. Pour la même raison, la couche poreuse 18 doit également permettre d'absorber l'eau provenant des dalles en béton 24 par les joints 26. En outre, le plancher de béton 12 peut également être muni sur sa face supérieure de drains 42 permettant d'évacuer l'eau ainsi collectée.

Bien entendu, l'invention n'est pas limitée au mode de réalisation qui vient d'être décrit à titre d'exemple, mais en couvre toutes les variantes supportées par les revendications. En particulier, on comprendra que le maillage des profilés constituant l'ossature de supportage peut être différent du maillage carré représenté sur la figure 2 et que les plaques constituant la peau métallique étanche peuvent être d'une forme différente de la forme rectangulaire représentée sur la figure 2.

## Revendications

1. Structure de protection du plancher (12) d'une enceinte de béton (10) devant contenir un fluide à haute température, comprenant une ossature de supportage en profilés entrecroisés selon un maillage régulier, un garnissage (24, 26) remplissant les alvéoles définis entre les profilés, et une peau métallique étanche (28) reposant sur l'ossature de supportage, caractérisée en ce que l'ossature de supportage (20) en profilés (22a, 22b) repose sur une couche poreuse (18) recouvrant le plancher de béton de l'enceinte et en ce que la peau métallique est constituée par des plaques (30) fixées sur les profilés et assemblées par des soudures (32) disposées selon les axes des profilés, ladite peau métallique présentant une remontée périphérique (34) le long des parois de l'enceinte, cette remontée périphérique définissant un bord libre (36) situé au-dessus du niveau maximum de fluide dans l'enceinte.

2. Structure selon la revendication 1, caractérisée en ce que ledit garnissage comprend des dalles en béton (24) remplissant les alvéoles et des joints souples (26) formés entre les dalles et les profilés.

3. Structure selon l'une quelconque des revendications 1 et 2, caractérisée en ce que les plaques (30) sont fixées sur les profilés (22a, 22b) par des moyens de fixation (33) aptes à se rompre sous l'effet d'une dilatation différentielle entre les plaques et les profilés.

4. Structure selon l'une quelconque des revendications 1 à 3, caractérisée en ce qu'elle comprend de plus une tôle (38) dont un bord est fixé sur les parois (14) de l'enceinte, ladite tôle coiffant le bord libre (36) de la remontée périphérique de la peau métallique.

5. Structure selon l'une quelconque des revendications 1 à 4, caractérisée en ce que des platines (27) pour calage de niveau sont disposées sous les profilés (22a, 22b).

6. Structure selon l'une quelconque des revendications 1 à 5, caractérisée en ce que la couche poreuse (18) est constituée par un lit de sable sec.

7. Structure selon l'une quelconque des revendications 1 à 6, caractérisée en ce que le plancher de béton (12) comporte des drains (42) sur sa face supérieure.

## Claims

1. Protective structure for the floor (12) of a concrete vessel (10) intended to contain a fluid at high temperature, said structure comprising a supporting framework of sectional members intercrossing in a regular meshwork, a packing (24, 26) filling the cavities formed between the sectional members, and a leaktight metal skin (28) resting on the supporting framework, characterized in that the supporting framework (20) of sectional members (22a, 22b) rests on a porous layer (18) covering the concrete floor of the vessel, and in that the metal skin is composed of plates (30) fixed on the sectional members and joined by welds (32) disposed along the axes of the sectional members, said metal skin having a peripheral upright portion (34) along the walls of the vessel, said peripheral upright portion forming a free rim 36 situated above the maximum level of fluid in the vessel.

2. Structure according to Claim 1, characterized in that said packing comprises concrete slabs (24) filling the cavities, with flexible joints (26) formed between the slabs and the sectional members.

3. Structure according to either of Claims 1 and 2, characterized in that the plates (30) are fixed on the sectional members (22a, 22b) by fastening means (33) adapted to break through the action of differential expansion between the plates and the sectional members.

4. Structure according to any one of Claims 1 to 3, characterized in that it includes in addition a metal plate (38) of which one edge is fixed on the walls (14) of the vessel and which caps the free rim (36) of the peripheral upright portion of the metal skin.

5. Structure according to any one of Claims 1 to 4, characterized in that levelling shims (27) are disposed under the sectional members (22a, 22b).

6. Structure according to any one of Claims 1 to 5, characterized in that the porous layer (18) is composed of a bed of dry sand.

7. Structure according to any one of Claims 1 to 6, characterized in that the concrete floor (12) is provided with drains (42) on its upper face.

## Patentansprüche

1. Protektionsstruktur des Bodens (12) einer Betonhülle (10), die ein Fluid hoher Temperatur aufnehmen soll, mit einer Tragkonstruktion aus gemäß einem regelmäßigen Netzwerk gekreuzten Profilstählen, einer die zwischen den Profilstählen begrenzten Zellen füllenden Auskleidung (24, 26) und einer dichten, auf der Tragkonstruktion ruhenden Metallhaut (28), dadurch gekennzeichnet, daß die Tragkonstruktion (20) aus Profilstählen (22a, 22b) auf einer porösen Schicht (18) ruht, die den Betonboden der Hülle überdeckt, und daß die Metallhaut von Platten (30) gebildet ist, die auf den Profilstählen befestigt und durch längs der Achsen der Profilstähle angeordneten Schweißungen (32) zusammengebaut sind, und daß die Metallhaut einen umfangsmäßigen Anstieg (34) längs der Hüllenwand aufweist, der einen sich oberhalb des maximalen Pegels des Fluids in der Hülle befindenden freien Rand (36) festlegt.

2. Struktur nach Anspruch 1, dadurch gekennzeichnet, daß die Auskleidung die Zellen ausfüllende Betonplatten (24) und nachgiebige Verbindungen (26) umfaßt, die zwischen den Betonplatten und den Profilstählen gebildet sind.

3. Struktur nach Anspruch 1 oder 2, dadurch gekennzeichnet, daß die Platten (30) an den Profilstählen (22a, 22b) mit Befestigungsmitteln (33) befestigt sind, die unter der Wirkung einer unterschiedlichen Ausdehnung zwischen den Platten und den Profilstählen brechen können.

4. Struktur nach einem der Ansprüche 1 bis 3, dadurch gekennzeichnet, daß sie ferner ein Blech (38) aufweist, dessen einer Rand an der Wand (14) der Hülle befestigt ist, wobei das Blech den freien Rand (36) des umfangsmäßigen Anstiegs der Metallhaut überdeckt.

5. Struktur nach einem der Ansprüche 1 bis 4, dadurch gekennzeichnet, daß unter den Profilstählen (22a, 22b) Platten (27) für die Höheneinstellung angeordnet sind.

6. Struktur nach einem der Ansprüche 1 bis 5, dadurch gekennzeichnet, daß die poröse Schicht (18) von einem trocknen Sandbett gebildet ist.

7. Struktur nach einem der Ansprüche 1 bis 6, dadurch gekennzeichnet, daß der Betonboden (12) auf seiner oberen Seite Drainagekanäle (42) aufweist.

FIG. 1

20

30

32

33

22b

22a

FIG. 2